# EUROPÄISCHE PATENTSCHRIFT

(11) **EP 3 337 995 B1**
(45) Veröffentlichungstag und Bekanntmachung des Hinweises auf die Patenterteilung: **07.10.2020**
(21) Anmeldenummer: 16766478.8
(22) Anmeldetag: 19.08.2016
(51) Int. Cl.: F16D 21/06, F16D 25/0638

(54) **KUPPLUNGSEINRICHTUNG FÜR HYBRIDANTRIEB**
CLUTCH DEVICE FOR A HYBRID DRIVE SYSTEM
DISPOSITIF D'EMBRAYAGE POUR MOTORISATION HYBRIDE

(30) Priorität: 20.08.2015 DE 102015215895
(43) Veröffentlichungstag der Anmeldung: 27.06.2018
(73) Patentinhaber: Schaeffler Technologies AG & Co. KG, 91074 Herzogenaurach (DE)
(72) Erfinder: LORENZ, Elmar, 77836 Rheinmünster Söllingen (DE); OSSADNIK, Thomas, 16547 Birkenwerder (DE)
(86) Internationale Anmeldenummer: PCT/DE2016/200386
(87) Internationale Veröffentlichungsnummer: WO 2017/028862

(56) Entgegenhaltungen:
- DE-A1-102011 009 807
- DE-B4-112006 001 481
- GB-A- 2 264 152
- US-B1- 6 378 675

## Beschreibung

Die Erfindung betrifft eine Kupplungseinrichtung gemäß dem Oberbegriff des Anspruchs 1.

Ein Kraftfahrzeug verfügt über einen ersten Antriebsmotor, der als elektrische Maschine ausgeführt ist, und einen zweiten Antriebsmotor, der als Verbrennungsmotor ausgeführt ist. Der Antrieb des Kraftfahrzeugs kann hybrid, also in einer beliebigen Kombination des ersten und/oder zweiten Antriebsmotors, erfolgen. Dazu ist zwischen den Antriebsmotoren und einem Getriebe des Kraftfahrzeugs eine Kupplungseinrichtung vorgesehen.

DE 10 2009 059 944 A1 betrifft eine Kupplungseinrichtung für ein hybrid antreibbares Kraftfahrzeug.

DE 10 2011 080 454 schlägt vor, parallel geschaltete Trennkupplungen in einem Antriebsstrang für ein hybrid antreibbares Kraftfahrzeug vorzusehen und an einer der Trennkupplungen einen Freilauf einzusetzen.

Aus jeder der DE 10 2011 009 807 A1, der US 6 378 675 B1, der GB 2 264 152 A und der DE 11 2006 001 481 B4 ist eine Kupplungseinrichtung gemäß dem Oberbegriff des Anspruchs 1 bekannt.

Der Erfindung liegt die Aufgabe zu Grunde, eine verbesserte Kupplungseinrichtung anzugeben, die auch in einem Hybridantrieb verwendet werden kann. Die Erfindung löst diese Aufgabe mittels des Gegenstands des unabhängigen Anspruchs. Unteransprüche geben bevorzugte Ausführungsformen wieder.

Eine Kupplungseinrichtung umfasst eine erste und eine zweite Eingangsseite sowie eine erste und eine zweite Ausgangsseite, wobei die Eingangsseiten und die Ausgangsseiten um eine gemeinsame Drehachse drehbar sind. Ferner umfasst die Kupplungseinrichtung eine erste Kupplung zwischen der ersten Eingangsseite und der ersten Ausgangsseite und eine zweite Kupplung zwischen der ersten Eingangsseite und der zweiten Ausgangsseite. Zusätzlich ist eine dritte Kupplung zwischen der ersten Eingangsseite und der zweiten Eingangsseite vorgesehen. Weiter ist eine passive Betätigungseinrichtung für die dritte Kupplung vorgesehen, wenn sich die zweite Eingangsseite schneller als die erste Eingangsseite dreht.

Die drei Kupplungen können platzsparend und einfach in einer gemeinsamen Funktionseinheit integriert werden. Durch die passive Betätigung der dritten Kupplung kann ein Einkuppeln eines mit der zweiten Eingangsseite verbundenen Antriebsmotors automatisch erfolgen. Eine Steuerung und eine separate Betätigungseinrichtung für die dritte Kupplung, beispielsweise mittels Hydraulik, können dabei entfallen.

Die Betätigungseinrichtung umfasst einen Freilauf, der Drehmoment nur von der zweiten Eingangsseite zur ersten Eingangsseite übermittelt. Die passive Betätigungseinrichtung kann die zweite Eingangsseite drehmomentschlüssig mit der ersten Eingangsseite verbinden, falls die Drehzahl der zweiten Eingangsseite größer als die der ersten Eingangsseite ist, und trennen, falls die Drehzahl der zweiten Eingangsseite kleiner als die der ersten Eingangsseite ist.

Der Freilauf umfasst ein Blattfederelement, das gegenüber der Rotationsebene um die Drehachse geneigt ist, und dessen axiale Enden in Anlage mit der ersten Eingangsseite bzw. der zweiten Eingangsseite stehen. Das Blattfederelement kann als Freilauf wirken und ferner eine axiale Betätigungskraft auf die dritte Kupplung ausüben, wenn der Freilauf schließt, also einen Drehmomentschluss zwischen der zweiten und der ersten Eingangsseite herstellt. Das Blattfederelement kann eine oder mehrere Blattfedern umfassen, die sich tangential zu einem Umfang um die Drehachse oder helixförmig auf dem Umfang erstrecken. An beiden axialen Seiten kann ein Reibschluss zur jeweiligen Eingangsseite vorgesehen sein; an einer axialen Seite kann das Blattfederelement auch drehmomentschlüssig angebracht sein.

Die erste Eingangsseite ist in einer Ausführungsform dazu eingerichtet, eine axiale Betätigungskraft der ersten, der zweiten und/oder der dritten Kupplung aufzunehmen. Dabei kann die erste Eingangsseite vorteilhaft mehrere Funktionen erfüllen. Insbesondere kann die erste Eingangsseite topfförmig mit einem radialen und einem axialen Abschnitt aufgebaut sein, wobei der radiale Abschnitt beispielsweise für die Aufnahme einer axialen Betätigungskraft passend geformt sein kann.

Die Betätigungseinrichtung ist bevorzugt radial innerhalb der dritten Kupplung angeordnet. Dieser Aufbau kann Platz sparen und vorteilhaft kurze Wege bei der Kraft-übermittlung zur Betätigungseinrichtung bieten.

Die erste und die zweite Kupplung können in einer bevorzugten Ausführungsform radial versetzt sein. Die erste und die zweite Kupplung können dazu eingerichtet sein, von der gleichen axialen Seite aus betätigt zu werden. Beispielsweise kann die erste Kupplung radial außerhalb der zweiten Kupplung liegen und Antriebsseiten der Kupplungen können jeweils radial außen und Abtriebsseiten radial innen liegen. Dabei kann ein im Wesentlichen S- oder Z-förmiges Verbindungselement vorgesehen sein, um die der Betätigungsseite der zweiten Kupplung gegenüberliegende Seite drehmomentschlüssig mit der radial außen liegenden Antriebsseite der ersten Kupplung - die gleichzeitig die erste Eingangsseite bilden kann - zu verbinden. Eine Betätigung der ersten Kupplung kann dabei durch eine axiale Aussparung in dem Verbindungselement verlaufen.

Die erste Eingangsseite ist bevorzugt mittels eines sich radial nach innen erstreckenden Halteelements gegenüber der Drehachse gehalten. Das Halteelement kann ebenfalls mit der Eingangsseite bzw. mit der radial außen liegenden Antriebsseite der ersten Kupplung verbunden sein. Das Halteelement ist dabei vorteilhafterweise nicht von dem durch die Kupplungseinrichtung übermittelten Drehmoment durchflossen. Das Halteelement und das oben beschriebene Verbindungselement können an der gleichen Seite mit der ersten Eingangsseite verbunden sein, wofür eine einzige kombinierte Verbindung, beispielsweise eine formschlüssige oder stoffschlüssige Verbindung, ausreichen kann.

Es ist weiterhin bevorzugt, dass alle drei Kupplungen in einem gemeinsamen Gehäuse angeordnet sind, das teilweise mit einem flüssigen Medium gefüllt ist. Das flüssige Medium, insbesondere ein Öl, kann zur Kühlung, Reinigung und Schmierung von Kupplungskomponenten dienen.

Weiter ist bevorzugt, dass zur Betätigung der Kupplungen hydraulische Betätigungseinrichtungen vorgesehen sind. Wenigstens eine der Kupplungen wird bevorzugt hydraulisch betätigt. Die erste und die zweite Kupplung werden bevorzugt mittels des gleichen Prinzips betätigt, insbesondere beide hydraulisch. Die dritte Kupplung wird bevorzugt ebenfalls hydraulisch betätigt. Ein Betätigungsfluid einer hydraulischen Betätigungseinrichtung kann das flüssige Medium umfassen, mit dem das Gehäuse wenigstens teilweise gefüllt ist.

Die erste Eingangsseite kann zur Verbindung mit einem Läufer einer elektrischen Maschine eingerichtet sein. Insbesondere kann der Läufer radial außen von einem Ständer der elektrischen Maschine umgeben sein. Dadurch kann sich eine kompakte Antriebseinheit ergeben, die die Kupplungseinrichtung und die elektrische Maschine miteinander integriert.

Außerdem kann die zweite Eingangsseite zur Verbindung mit einer Abtriebswelle einer Brennkraftmaschine eingerichtet sein.

Die Erfindung wird nun mit Bezug auf die beigefügten Figuren genauer beschrieben, in denen:
- Fig. 1: eine exemplarische Kupplungseinrichtung;
- Fig. 2: eine weitere exemplarische Kupplungseinrichtung; und
- Fig. 3: eine Kupplungseinrichtung nach den Figuren 1 oder 2 mit einer passiven Betätigungseinrichtung.
darstellt.

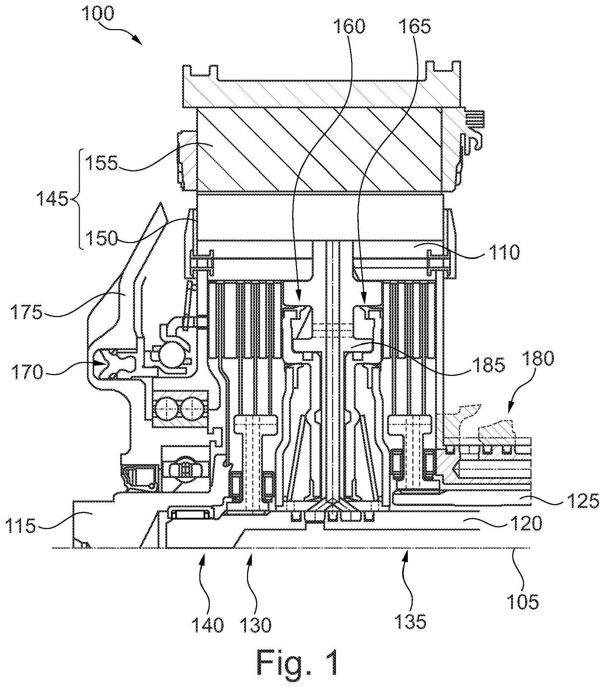

Figur 1 zeigt eine exemplarische Kupplungseinrichtung 100. Um eine Drehachse 105 sind eine erste Eingangsseite 110, eine zweite Eingangsseite 115, eine erste Ausgangsseite 120 und eine zweite Ausgangsseite 125 angeordnet.

Eine erste Kupplung 130 liegt zwischen der ersten Eingangsseite 110 und der ersten Ausgangsseite 120, eine zweite Kupplung 135 zwischen der ersten Eingangsseite 110 und der zweiten Ausgangsseite 125 und eine optionale dritte Kupplung 140 zwischen der ersten Eingangsseite 110 und der zweiten Eingangsseite 115. Die ersten beiden Kupplungen 130 und 135 sind radial oder bevorzugt axial zueinander versetzt und bilden eine axiale Doppelkupplung. Die dritte Kupplung 140 ist bevorzugt axial zu wenigstens einer der beiden anderen Kupplungen 130 und 135 versetzt.

Die erste Eingangsseite 110 ist zur Verbindung mit einer elektrischen Maschine 145 eingerichtet, die allgemein einen Läufer 150 und einen Ständer 155 umfasst. Bevorzugt ist die elektrische Maschine 145 vom Typ des Innenläufers, wobei der Läufer 150 radial innerhalb des Ständers 155 liegt. Dabei ist weiter bevorzugt, dass der Ständer 155 wenigstens eine Magnetspule und der Läufer 150 wenigstens einen Permanentmagneten aufweist. Der Läufer 150 liegt bevorzugt radial außerhalb der Kupplungen 130, 135 und 140 und ist in der dargestellten Ausführungsform mittels Nieten mit der ersten Eingangsseite 110 verbunden. Die zweite Eingangsseite 115 ist bevorzugt zur Verbindung mit einer Brennkraftmaschine, insbesondere einem Verbrennungsmotor, weiter bevorzugt einer Hubkolbenmaschine, eingerichtet.

Die Ausgangsseiten 120 und 125 sind zur Verbindung mit Eingangswellen eines Doppelgetriebes (nicht dargestellt) eingerichtet. Das Doppelgetriebe ist üblicherweise dazu eingerichtet, jede der Eingangswellen mittels eines anderen Gangradpaars mit einer gemeinsamen Ausgangswelle zu koppeln. Ist der Antriebsstrang in einem Kraftfahrzeug angeordnet, kann die Ausgangswelle letztlich auf ein Antriebsrad des Kraftfahrzeugs wirken. Um eine Gangstufe auszuwählen wird in der Regel eine der Kupplungen 130 oder 135 geschlossen, während die jeweils andere Kupplung 130, 135 geöffnet wird. Bevorzugt umfasst das Doppelgetriebe an jeder Getriebewelle mehrere Gangradpaare, die jeweils eine Gangstufe realisieren. Ein Gangradpaar kann üblicherweise ein- oder ausgelegt werden, wenn es mit einer Ausgangswelle 120, 125 verbunden ist, dessen zugeordnete Kupplung 130, 135 gerade geöffnet ist.

Die Kupplungseinrichtung 100 ist insbesondere dazu eingerichtet, im Antriebsstrang eines Kraftfahrzeugs eingesetzt zu werden. Dabei kann das Kraftfahrzeug bevorzugt hybrid angetrieben werden, also alternativ durch den Verbrennungsmotor, durch die elektrische Maschine 145 oder durch beide Antriebsmotoren. Soll der Verbrennungsmotor genutzt werden, so wird die dritte Kupplung 140 geschlossen. Soll die elektrische Maschine 145 genutzt werden, so wird sie üblicherweise elektrisch derart angesteuert, dass Drehmoment umgesetzt werden kann. Beide Antriebsmotoren können sowohl positives als auch negatives Drehmoment in den Antriebsstrang einbringen. Die elektrische Maschine 145 kann auch kinetische Energie aus dem Antriebsstrang aufnehmen und in elektrische Energie umwandeln, die beispielsweise in einem Energiespeicher temporär gespeichert werden kann. Durch ihren kompakten Aufbau eignet sich die Kupplungseinrichtung 100 insbesondere zum Einbau vorne quer in einem Kraftfahrzeug.

Der ersten Kupplung 130 ist eine erste Betätigungseinrichtung 160, der zweiten Kupplung 135 eine zweite Betätigungseinrichtung 165 und der dritten Kupplung 140 eine dritte Betätigungseinrichtung 170 zugeordnet. Bevorzugt arbeiten alle drei Betätigungseinrichtungen 160, 165 und 170 hydraulisch und sind jeweils dazu eingerichtet, eine axiale Betätigungskraft auf eine der Kupplungen 130, 135 und 140 auszuüben, sodass Reibelemente der Kupplungen 130, 135 oder 140 axial aneinandergepresst werden, um einen Reibschluss zu erzeugen und ein Drehmoment zwischen den Reibelementen zu übertragen. Bevorzugt werden die Reibelemente jeweils zwischen der zugeordneten Betätigungseinrichtung 160, 165, 170 und einem axialen Widerlager zusammengepresst. Weiterhin ist bevorzugt, dass die hydraulischen Betätigungseinrichtungen 160, 165 und 170 einzeln aktiv gesteuert werden können, indem etwa mittels eines Ventils oder eine Pumpe ein unter Druck stehendes Medium gezielt in einen hydraulischen Arbeitsraum der jeweiligen Betätigungseinrichtung 160, 165 oder 170 ein- oder aus ihm abgelassen wird. Alternativ dazu kann auch beispielsweise eine fliehölgesteuerte Betätigung vorgesehen sein.

Die drei Kupplungen 130, 135 und 140 sind bevorzugt in einem gemeinsamen Gehäuse 175 angeordnet, das wenigstens teilweise mit einem flüssigen Medium 180, insbesondere einem Öl, gefüllt sein kann. Das Medium 180 kann auch als Arbeitsmedium (hydraulisches Fluid) einer der Betätigungseinrichtungen 160, 165 und 170 verwendet werden. Die Kupplungen 130, 135 und 140 sind bevorzugt jeweils vom nasslaufenden Typ und können unabhängig voneinander als Einscheiben- oder Mehrscheibenkupplung ausgelegt sein. Weiter bevorzugt sind die erste Kupplung 130 und die zweite Kupplung 135 vom Mehrscheibentyp, um ein feinfühliges Öffnen und Schließen des Drehmomentflusses durch die Kupplungen 130, 135 zu erlauben. Die dritte Kupplung 140 kann auch wie dargestellt vom Einscheibentyp sein, wobei die dritte Kupplung 140 als Schaltkupplung ausgelegt sein kann, die möglichst nicht unter Schlupf betrieben wird.

Axial zwischen der ersten Kupplung 130 und der zweiten Kupplung 135 befindet sich ein radialer Flansch 185 als Widerlager, gegen das die Kupplungen 130, 135 mittels der jeweils zugeordneten Betätigungseinrichtung 160, 165 gepresst werden können. Betätigungskräfte der Betätigungseinrichtungen 160, 165, 170 sind bevorzugt innerhalb der Kupplungseinrichtung 100 abgestützt, sodass keine resultierenden Kräfte nach außen abzustützen sind.

Soll die Kupplungseinrichtung 100 in einem Antriebsstrang ohne die elektrische Maschine 145 eingesetzt werden, kann die dritte Kupplung 140 auch entfallen. Die erste Eingangsseite 110 und die zweite Eingangsseite 115 fallen dann zusammen.

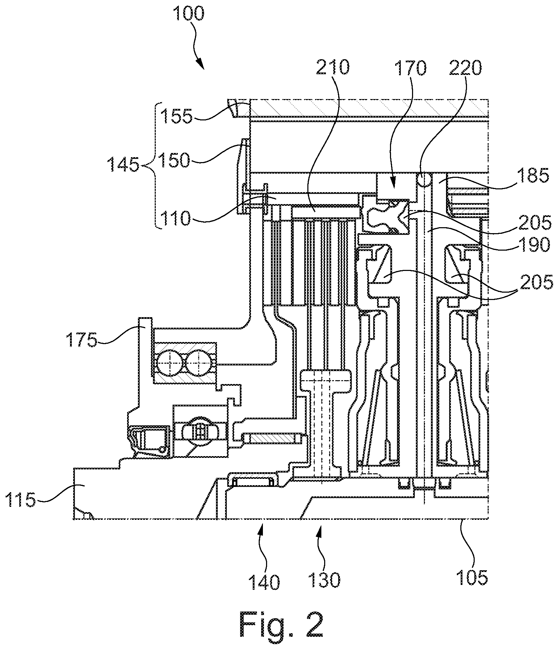

Figur 2 zeigt eine weitere exemplarische Kupplungseinrichtung 100. Fig. 2 unterscheidet sich von Fig. 1 hauptsächlich dadurch, dass die dritte Betätigungseinrichtung 170 im Bereich des Flanschs 185 angeordnet ist. Bevorzugt sind die drei Betätigungseinrichtungen 160, 165 und 170 mit dem Flansch 185 integriert ausgeführt, indem der Flansch 185 axiale Vertiefungen bereitstellt, die hydraulische Arbeitsräume 205 der Betätigungseinrichtungen 160, 165 und 170 begrenzen und die mittels der zugeordneten hydraulischen Kolben abgeschlossen sind. Ein Betätigungselement 210 zwischen der dritten Betätigungseinrichtung 170 und der dritten Kupplung 140 verläuft hier auf der radialen Außenseite der ersten Kupplung 130 in axialer Richtung.

Die Zuführung 190 auf der radialen Außenseite ist mittels eines Verschlusskörpers 220, der hier als Kugel ausgeführt ist, verschlossen. Eine Sicherung des Verschlusskörpers 220 erfolgt bevorzugt durch den radial außen anliegenden Läufer 150 der elektrischen Maschine 145.

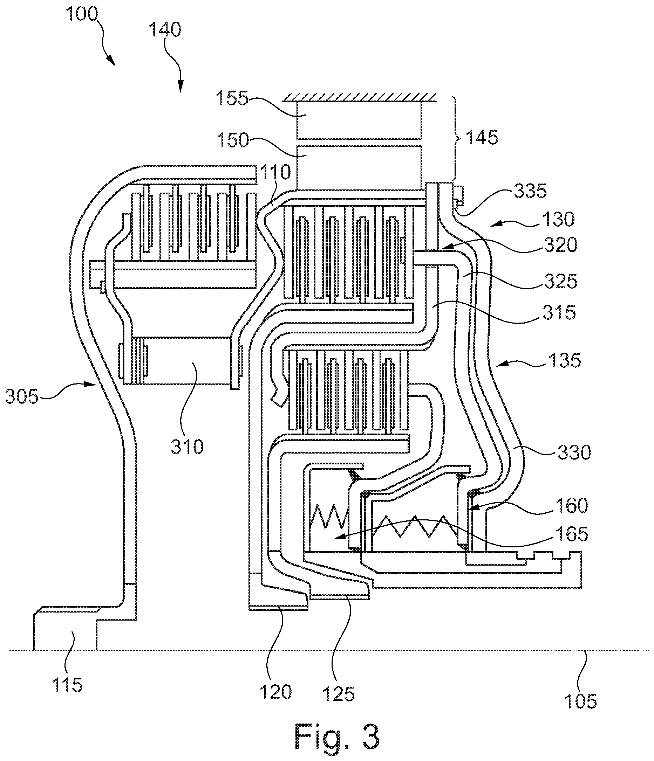

Figur 3 zeigt eine Kupplungseinrichtung 100 nach den Figuren 1 oder 2 mit einer passiven Betätigungseinrichtung 305, die dazu eingerichtet ist, die dritte Kupplung 140 zu betätigen, und damit einen Drehmomentfluss zwischen der zweiten Eingangsseite 115 und der ersten Eingangsseite 110 zu ermöglichen, wenn die Drehzahl der zweiten Eingangsseite 115 höher als die der ersten Eingangsseite 110 liegt. Das Betätigen erfolgt bevorzugt mittels einer axialen Kompression von Reibelementen der dritten Kupplung 140. Die passive Betätigungseinrichtung 305 ist drehzahlgesteuert und bedarf keiner aktiven Steuerung, beispielsweise in Form einer mechanischen Verstellung oder eines hydraulischen Drucks.

Die passive Betätigungseinrichtung 305 ist als Freilauf konzipiert, der eine Drehmomentübertragung ausschließlich von der zweiten Eingangsseite 115 zur ersten Eingangsseite 110, nicht aber in entgegengesetzter Richtung, erlaubt. Die dritte Kupplung 140 umfasst exemplarisch eine radial außen liegende Antriebsseite und eine radial innen liegende Abtriebsseite, wobei weiter exemplarisch die Betätigungseinrichtung 305 radial innerhalb der dritten Kupplung 140 angeordnet ist; eine Anordnung radial außerhalb oder axial versetzt zur Kupplung 140 bzw. deren Reibbelägen ist ebenfalls möglich.

In der dargestellten, besonders bevorzugten Ausführungsform umfasst der Freilauf eine Blattfeder 310, die mit der Rotationsebene um die Drehachse 105 einen spitzen Winkel einschließt. Die Blattfeder kann sich tangential zu einem Umfang um die Drehachse 105 oder helixförmig auf dem Umfang erstrecken. Ein erstes axiales Ende der Blattfeder 310 ist mittels Reibschluss oder fest mit der ersten Eingangsseite 110 verbunden. Dazu kann sich die erste Eingangsseite 110 wie dargestellt radial nach innen bis zur Blattfeder 310 erstrecken. Dabei kann die erste Eingangsseite 110 auch als axiales Anlageelement für die dritte Kupplung 140 dienen. Das gegenüber liegende zweite axiale Ende ist mit einer Ausgangsseite der dritten Kupplung 140 verbunden, wobei wieder ein Reibschluss oder ein fester Eingriff möglich sind, mit der Einschränkung, dass wenigstens an einem axialen Ende ein Reibschluss vorliegen muss. In der folgenden Erläuterung wird exemplarisch davon ausgegangen, dass zwischen der Blattfeder 315 und der dritten Kupplung 140 ein Reibschluss vorliegt.

Ist die dritte Kupplung 140 nicht betätigt, also nicht axial komprimiert, sodass sie kein wesentliches Drehmoment zwischen der zweiten Eingangsseite 115 und der ersten Eingangsseite 110 übermittelt, so überträgt sie üblicherweise doch ein gewisses Schleppmoment, das insbesondere durch das flüssige Medium 180 zwischen Reibelementen der dritten Kupplung 140 bedingt sein kann. Zwischen der Blattfeder 310 und der Ausgangsseite der dritten Kupplung 140 besteht daher eine Relativbewegung, falls die Eingangsdrehzahl der dritten Kupplung 140 von ihrer Ausgangsdrehzahl verschieden ist. Durch die Relativbewegung wird die Blattfeder 310 um die Drehachse 105 verdreht, wodurch sie bestrebt ist, ihre axiale Länge zu ändern. Bei Verdrehung in der einen Richtung übt die Blattfeder 310 daher eine axiale Spreizkraft aus, während sie bei Verdrehung in der anderen Richtung eher axial komprimiert wird. Die Spreizkraft wird dazu verwendet, die dritte Kupplung 140 axial zu komprimieren und dadurch zu betätigen bzw. zu schließen.

Die erste Kupplung 130 und die zweite Kupplung 135 sind in der vorliegenden Ausführungsform radial versetzt angeordnet, obwohl auch eine axial versetzte Anordnung wie in den Ausführungsformen der Figuren 1 oder 2 verwendet werden kann. Exemplarisch liegt die erste Kupplung 130 radial außen und die zweite Kupplung 135 radial innen. Antriebsseiten der Kupplungen 130, 135 liegen jeweils auf radialen Außenseiten der ihnen zugeordneten Reibelemente, und Abtriebsseiten entsprechend radial innen. Die Abtriebsseiten sind über radiale Elemente drehmomentschlüssig mit den Ausgangsseiten 120 bzw. 125 der Kupplungseinrichtung 100 verbunden.

Unabhängig davon, ob die Blattfeder 310 eingesetzt wird oder nicht, ist die erste Eingangsseite 110 bevorzugt dazu eingerichtet, als axiale Anlagefläche für die Reibelemente der ersten Kupplung 130 und/oder der dritten Kupplung 140 zu dienen. Dazu kann die erste Eingangsseite 110 wie dargestellt topfförmig mit einem axialen und einem radialen Abschnitt ausgeführt sein. Der axiale Abschnitt greift vorzugsweise formschlüssig in Reibelemente der ersten Kupplung 130 ein und der radiale Abschnitt, der sich axial einseitig und bevorzugt einstückig an den axialen Abschnitt anschließt, erstreckt sich beispielsweise wie dargestellt S-förmig zunächst zu Reibelementen der dritten Kupplung 140, dann weiter radial nach innen und axial zu Reibelementen der ersten Kupplung 130 und optional von dort weiter radial nach innen und axial in Richtung der Blattfeder 310. Die axialen Anlageflächen der ersten Eingangsseite 110 können dem radialen Abschnitt eine konzentrische Wellenform um die Drehachse 105 verleihen.

Bevorzugt können beide Kupplungen 130, 135 von der gleichen axialen Seite aus betätigt werden, wobei diese Seite weiter bevorzugt der Seite gegenüberliegt, die axial der dritten Kupplung 140 zugewandt ist. In der Darstellung von Figur 3 sind beide Kupplungen 130, 135 von rechts zu betätigen. Entsprechende hydraulische Betätigungseinrichtungen 160 und 165 sind in jeweils einer möglichen Ausführungsform dargestellt; andere Ausführungsformen sind jedoch ebenfalls möglich.

Eine drehmomentschlüssige Anbindung der Antriebsseite der zweiten Kupplung 135 an die erste Eingangsseite 110 der Kupplungseinrichtung 100 erfolgt bevorzugt mittels eines Verbindungselements 315, das sich S- oder Z-förmig von der linken Seite der zweiten Kupplung 135 zunächst radial nach außen, dann in einem radialen Bereich zwischen der ersten Kupplung 130 und der zweiten Kupplung 135 axial nach rechts und dann an der rechten Seite der ersten Kupplung 130 rechts vorbei radial nach außen bis zur ersten Eingangsseite 110 erstreckt. Dabei ist eine Aussparung 320 im Verbindungselement 315 vorgesehen, um ein Betätigungselement 325 axial passieren zu lassen, das axial auf die Reibelemente der ersten Kupplung 130 wirken kann, um die erste Kupplung 130 zu betätigen bzw. axial zu komprimieren und dadurch zu schließen.

Das Verbindungselement 315 ist bevorzugt mittels Formschluss, beispielsweise einer Verzahnung oder einem Eingriffsabschnitt, drehmomentschlüssig mit der ersten Eingangsseite 110 verbunden. Bevorzugt ist die erste Eingangsseite 110 auf der gleichen axialen Seite mittels eines Halteelements 330 radial abgestützt. Das Halteelement 330 erstreckt sich in der vorliegenden Ausführungsform radial nach innen bis zu einer Welle oder einer Achse, die hier beispielhaft zur Ölführung zur ersten Betätigungseinrichtung 160 vorgesehen ist. In einer anderen Ausführungsform kann auch eine Abstützung bezüglich einer Welle erfolgen, die mit einer der Ausgangsseiten 120, 125 der Kupplungseinrichtung 100 verbunden werden kann. Dabei kann das Halteelement 330 auch dazu eingerichtet sein, ein Drehmoment in radialer Richtung zu übertragen.

Das Halteelement 330 liegt bevorzugt axial weiter außen als das Verbindungselement 315 im Bereich der ersten Eingangsseite 110. Das Halteelement 330 und das Verbindungselement 315 können mittels der gleichen, einer einheitlichen oder einer integrierten Verbindung drehmomentschlüssig mit der ersten Eingangsseite 110 verbunden werden, wobei eine formschlüssige Verbindung bevorzugt ist. Diese Verbindung kann unabhängig von der Verwendung einer Blattfeder 310 und auch unabhängig davon, ob die dritte Kupplung 140 eingesetzt wird oder nicht, an einer radialen Doppelkupplung eingesetzt werden. In der dargestellten Ausführungsform sind das Halteelement 330 und das Verbindungselement 315 mittels eines gemeinsamen Sicherungselements 335 in axialer Richtung an der ersten Eingangsseite 110 gehalten. In anderen Ausführungsformen kann auch eine andere axiale Sicherung verwendet werden, beispielsweise ein Bajonettverschluss, ein Sicherungsstift oder eine Vernietung, eine Verstemmung oder mittels Verbiegen.

### Bezugszeichenliste

- 100: Kupplungseinrichtung
- 105: Drehachse
- 110: erste Eingangsseite
- 115: zweite Eingangsseite
- 120: erste Ausgangsseite
- 125: zweite Ausgangsseite

- 130: erste Kupplung
- 135: zweite Kupplung
- 140: dritte Kupplung

- 145: elektrische Maschine
- 150: Läufer
- 155: Ständer

- 160: erste Betätigungseinrichtung
- 165: zweite Betätigungseinrichtung
- 170: dritte Betätigungseinrichtung
- 175: Gehäuse
- 180: flüssiges Medium
- 185: Flansch
- 190: Zuführung

- 205: hydraulischer Arbeitsraum
- 210: Betätigungselement

- 305: Betätigungseinrichtung
- 310: Blattfeder
- 315: Verbindungselement
- 320: Aussparung
- 325: Betätigungselement
- 330: Halteelement
- 335: Sicherungselement

## Patentansprüche

1. Kupplungseinrichtung (100) mit:
einer ersten Eingangsseite (110), einer zweiten Eingangsseite (115), einer ersten Ausgangsseite (120) und einer zweiten Ausgangsseite (125), wobei die erste Eingangsseite (110), die zweite Eingangsseite (115), die erste Ausgangsseite (120) und die zweite Ausgangsseite (125) um eine gemeinsame Drehachse (105) drehbar sind;
einer ersten Kupplung (130) zwischen der ersten Eingangsseite (110) und der ersten Ausgangsseite (120);
einer zweiten Kupplung (135) zwischen der ersten Eingangsseite (110) und der zweiten Ausgangsseite (125);
einer dritten Kupplung (140) zwischen der ersten Eingangsseite (110) und der zweiten Eingangsseite (115); und
einer passiven Betätigungseinrichtung (305) für die dritte Kupplung (140), wenn sich die zweite Eingangsseite (115) schneller als die erste Eingangsseite (110) dreht, wobei die passive Betätigungseinrichtung einen Freilauf (305) umfasst, der ein Drehmoment nur von der zweiten Eingangsseite (115) zu der ersten Eingangsseite (110) übermittelt,
**dadurch gekennzeichnet, dass**
der Freilauf (305) ein Blattfederelement (310) umfasst, das gegenüber einer Rotationsebene um die Drehachse (105) geneigt ist und dessen axiale Enden in Anlage mit der ersten Eingangsseite (110) bzw. der zweiten Eingangsseite (115) stehen.

2. Kupplungseinrichtung (100) nach Anspruch 1, wobei die erste Eingangsseite (110) dazu eingerichtet ist, eine axiale Betätigungskraft der ersten Kupplung (130), der zweiten Kupplung (135) oder der dritten Kupplung (140) aufzunehmen.

3. Kupplungseinrichtung (100) nach Anspruch 1 oder 2, wobei die passive Betätigungseinrichtung (305) radial innerhalb der dritten Kupplung (140) angeordnet ist.

4. Kupplungseinrichtung (100) nach einem der Ansprüche 1 bis 3, wobei die erste Kupplung (130) und die zweite Kupplung (135) radial versetzt sind und dazu eingerichtet sind, von einer gleichen axialen Seite aus betätigt zu werden.

5. Kupplungseinrichtung (100) nach einem der Ansprüche 1 bis 4, wobei die erste Eingangsseite (110) mittels eines sich radial nach innen erstreckenden Halteelements (330) gegenüber der Drehachse (105) gehalten ist.

6. Kupplungseinrichtung (100) nach einem der Ansprüche 1 bis 5, wobei alle die erste Kupplung (130), die zweite Kupplung (135) und die dritte Kupplung (140) in einem gemeinsamen Gehäuse (175) angeordnet sind, das teilweise mit einem flüssigen Medium (180) gefüllt ist.

7. Kupplungseinrichtung (100) nach einem der Ansprüche 1 bis 6, wobei die erste Eingangsseite (110) zur Verbindung mit einem Läufer (150) einer elektrischen Maschine (145) eingerichtet ist.

8. Kupplungseinrichtung (100) nach Anspruch 7, wobei der Läufer (150) radial außen von einem Ständer (155) der elektrischen Maschine (145) umgeben ist.

9. Kupplungseinrichtung (100) nach einem der Ansprüche 1 bis 8, wobei die zweite Eingangsseite (115) zur Verbindung mit einer Abtriebswelle einer Brennkraftmaschine eingerichtet ist.

## Claims

1. A clutch device (100) comprising:
a first input side (110), a second input side (115), a first output side (120) and a second output side (125), wherein the first input side (110), the second input side (115), the first output side (120) and the second output side (125) can be rotated about a common axis of rotation (105);
a first clutch (130) between the first input side (110) and the first output side (120);
a second clutch (135) between the first input side (110) and the second output side (125);
a third clutch (140) between the first input side (110) and the second input side (115); and
a passive actuator (305) for the third clutch (140) when the second input side (115) rotates faster than the first input side (110), wherein the passive actuator comprises a freewheel (305) that transmits torque only from the second input side (115) to the first input side (110),
**characterised in that**
the freewheel (305) comprises a leaf spring element (310) which is inclined with respect to a plane of rotation about the axis of rotation (105) and the axial ends thereof are in contact with the first input side (110) or the second input side (115).

2. The clutch device (100) according to claim 1, wherein the first input side (110) is configured to receive an axial actuating force of the first clutch (130), the second clutch (135) or the third clutch (140).

3. The clutch device (100) according to claim 1 or claim 2, wherein the passive actuator (305) is arranged radially inside the third clutch (140).

4. The clutch device (100) according to any one of claims 1 to 3, wherein the first clutch (130) and the second clutch (135) are radially offset and are configured to be actuated from the same axial side.

5. The clutch device (100) according to any one of claims 1 to 4, wherein the first input side (110) is held with respect to the axis of rotation (105) by means of a radially inwardly extending holding element (330).

6. The clutch device (100) according to any one of claims 1 to 5, wherein the first clutch (130), the second clutch (135) and the third clutch (140) are all arranged in a common housing (175), which is partially filled with a liquid medium (180).

7. The clutch device (100) according to any one of claims 1 to 6, wherein the first input side (110) is configured for connection to a rotor (150) of an electric machine (145).

8. The clutch device (100) according to claim 7, wherein the rotor (150) is surrounded radially on the outside by a stator (155) of the electric machine (145).

9. The clutch device (100) according to any one of claims 1 to 8, wherein the second input side (115) is configured for connection to an output shaft of an internal combustion engine.

## Revendications

1. Dispositif d'embrayage (100) comprenant :
un premier côté d'entrée (110), un second côté d'entrée (115), un premier côté de sortie (120) et un second côté de sortie (125), le premier côté d'entrée (110), le second côté d'entrée (115), le premier côté de sortie (120) et le second côté de sortie (125) pouvant tourner autour d'un axe de rotation commun (105) ;
un premier embrayage (130) entre le premier côté d'entrée (110) et le premier côté de sortie (120) ;
un deuxième embrayage (135) entre le premier côté d'entrée (110) et le second côté de sortie (125) ;
un troisième embrayage (140) entre le premier côté d'entrée (110) et le second côté d'entrée (115) ; et
un actionneur passif (305) pour le troisième embrayage (140) lorsque le second côté d'entrée (115) tourne plus rapidement que le premier côté d'entrée (110), l'actionneur passif comprenant un embrayage unidirectionnel (305) qui transmet un couple uniquement du second côté d'entrée (115) au premier côté d'entrée (110),
**caractérisé en ce que**
l'embrayage unidirectionnel (305) comprend un élément de ressort à lame (310) qui est incliné par rapport à un plan de rotation autour de l'axe de rotation (105) et dont les extrémités axiales sont en contact avec le premier côté d'entrée (110) ou le second côté d'entrée (115).

2. Dispositif d'embrayage (100) selon la revendication 1, le premier côté d'entrée (110) étant conçu pour recevoir une force d'actionnement axiale du premier embrayage (130), du deuxième embrayage (135) ou du troisième embrayage (140).

3. Dispositif d'embrayage (100) selon la revendication 1 ou 2, l'actionneur passif (305) étant disposé radialement à l'intérieur du troisième embrayage (140).

4. Dispositif d'embrayage (100) selon l'une quelconque des revendications 1 à 3, le premier embrayage (130) et le deuxième embrayage (135) étant radialement décalés et conçus pour être actionnés depuis un même côté axial.

5. Dispositif d'embrayage (100) selon l'une quelconque des revendications 1 à 4, le premier côté d'entrée (110) étant maintenu au moyen d'un élément de maintien (330) s'étendant radialement vers l'intérieur par rapport à l'axe de rotation (105).

6. Dispositif d'embrayage (100) selon l'une quelconque des revendications 1 à 5, le premier embrayage (130), le deuxième embrayage (135) et le troisième embrayage (140) étant disposés dans un logement commun (175) qui est partiellement rempli d'un liquide (180).

7. Dispositif d'embrayage (100) selon l'une quelconque des revendications 1 à 6, le premier côté d'entrée (110) étant conçu pour être connecté à un rotor (150) d'une machine électrique (145).

8. Dispositif d'embrayage (100) selon la revendication 7, le rotor (150) étant entouré radialement à l'extérieur par un support (155) de la machine électrique (145).

9. Dispositif d'embrayage (100) selon l'une quelconque des revendications 1 à 8, le second côté d'entrée (115) étant conçu pour être connecté à un arbre de sortie d'un moteur à combustion interne.
